# EUROPÄISCHE PATENTANMELDUNG

(11) **EP 2 096 147 A1**
(43) Veröffentlichungstag der Anmeldung: **02.09.2009**
(21) Anmeldenummer: 09002183.3
(22) Anmeldetag: 17.02.2009
(51) Int. Cl.: C09D 1/04, C09D 5/02, C09D 5/16, C04B 24/12, C04B 26/32, C04B 28/26

(54) **Iminopolycarbonsäure als Mittel zur Verhinderung der oberflächlichen Verschmutzung von Silikatfarben und Silikatputzen, von Dispersionsfarben und Dispersionsputzen, von Silikatharzfarben, sowie von Silikatharzputzen**

(30) Priorität: 27.02.2008 DE 102008011292
(71) Anmelder: BK Giulini GmbH, 67065 Ludwigshafen (DE)
(72) Erfinder: Staffel, Thomas, Dr., 67269 Grünstadt (DE); Weber, Siegfried, 68526 Ladenburg (DE)

(57) **Zusammenfassung**

Die Erfindung betrifft geeignete Verbindungen, welche organische Verschmutzung auf der Oberfläche von Silikatfarben und Silikatputzen, von Dispersionsfarben- und Dispersionsputzen, von Silikatharzfarben und Silikatharzputzen verhindern. Erfindungsgemäß sind hierzu Salze von organischen Iminopolycarbonsäuren bzw. ihre Kalium- oder Natriumsalze, insbesondere Iminodibernsteinsäure, Nitrilotrieessigsäure K-Salze und Methylglycindiessigsäure oder deren Na oder K-Salze.

## Beschreibung

Die Erfindung betrifft geeignete Verbindungen, welche organische Verschmutzung auf der Oberfläche von Silikatfarben und Silikatputzen, von Dispersionsfarben- und Dispersionsputzen, von Silikatharzfarben und Silikatharzputzen verhindern. Erfindungsgemäß sind hierzu Salze von organischen Iminopolycarbonsäuren bzw. ihre Kalium- oder Natriumsalze, insbesondere Iminodibernsteinsäure oder deren Na oder K-Salze Nitrilotrieessigsäure /NTA/ oder deren Na oder K-Salze und Methylglycindiessigsäure oder deren Na oder K-Salze /MGDA/

### Stand der Technik:

Wenn Putze und Farben im Außenbereich eingesetzt werden, unterliegen sie einem biologischen Angriff, der nach mehr oder weniger langen Zeiten zu optischen Beeinträchtigungen durch Flecken oder ganzflächigem Bewuchs durch Algen und Flechten führt, die nur schwer zu entfernen sind, da sie auch unter die Oberfläche eindringen.
Um solchen Effekten entgegen zu wirken, werden kommerziellen Produkten Filmkonservierungsmittel zugesetzt. Diese sind nach dem Stand der Technik insbesondere Derivate des Isothiazols oder des Triazins. Den bekannten Konservierungsmitteln ist gemeinsam, dass sie durch Regenwasser langsam ausgewaschen werden, so dass sie in ihre kontaminierenden Wirkung nachlassen vor allem aber so in den Boden gelangen und diesen vergiften, da es sich um pflanzenschädliche und gesundheitsschädliche Stoffe handelt, die nur langsam biologisch abgebaut werden.

Es besteht daher die Aufgabe neue Mittel zu finden, die bei guter algen- und flechtenbewuchsverhindernder Wirkung in Silikatfarben und Silikatputzen, in Dispersionsfarben- und Dispersionsputzen, in Silikatharzfarben und Silikatharzputzen nur wenig ausgewaschen werden, so dass auch nach Jahren noch ein Schutz besteht, die weitgehend ungiftig sind, bzw. schnell durch Bodenbakterien abgebaut werden, so dass die Umwelt oder Umgebung nicht kontaminiert wird,
Überraschend wurde nun gefunden, dass die oben erwähnten Verbindungen, Iminodibernsteinsäure oder deren Na oder K-Salze Nitrilotrieessigsäure /NTA/ oder deren Na oder K-Salze und Methylglycindiessigsäure oder deren Na oder K-Salze /N4GDA/, insbesondere aber das Natriumsalz der Iminodibernsteinsäure bereits in Mengen von 0,1-2,5 Gew. %, insbesondere von 02 bis 05 Gew. % in Silikatfarben und Silikatputzen, in Dispersionsfarben- und Dispersionsputzen, in Silikatharzfarben und Silikatharzputzen bei Verwendung im Außenbereich auch nach **5 Jahren** noch eine weitestgehend algen- und flechtenfreie, saubere, Putz- oder Farbenoberfläche zu bewahren hilft.
Die oben erwähnten Verbindungen, sind sämtlich in die Gefahrenklasse 1 eingestuft, so daß sie in der Natur biologisch gut abbaubar sind und geringfügig ausgewaschene Anteile sich im Boden nicht anreichern können und somit das übrige Pflanzenwachstum nicht beeinflussen. Die Wirkung der vorstehend genannten Verbindungen wurde unter realistischen Witterungsbedingungen im Außenbereich getestet. Es wurden entsprechende Testplatten bzw. Bewitterungswände mit den oben genannten Putzen und Farben versehen.
Diese Testplatten von einer Größe von 20 x 40 x 50 cm diese wurden in senkrechter Lage auf einer Wiese zwischen Wald und Buschwerk, einer verkehrsreichen Straße und einem Flußlauf aufgestellt.
Die Testplatten bestanden aus 8 cm dicken Styroporplatten mit den Maßen 30 x 40 cm, die auf der Forderseite und an den Kanten mit Kunststoffklebemörtel, in den ein Kunststoffnetz eingearbeitet ist, gegen Wasseraufnahme beschichtet sind und mit der Rückseite an ein Holzbrett 40x50 cm geklebt und verschraubt sind. Die Frontseite wird 3,5 mm dick mit einem Silikatputz gemäß der folgenden Standardrezeptur beschichtet, wobei eine Hälfte der Platten 2 Gew. % eines Härters auf Basis Aluminiumphosphat /Targon HSF™ enthält. Der anderen Hälfte der Platte wurde eine erfindungsgemäße Verbindung in Mengen gemäß der Tabelle 1 zugefügt.
1) Putzformulierung ohne Zusatz
2) Dilurit^{™} 808, Produkt der Firma BK Giulini GmbH, auf Basis Triazin, Einsatz 0,5 %
3) Actizide EPS^{™} Paste, auf Basis Triazin, Produkt der Firma Thor Chemie, Einsatz 0,5 %
4) NTA Nitrilotrieessigsäure, Handelsprodukt, Einsatz 0,2% reine Substanz
5) Iminodibernsteinsäure - Natriumsalz, kurz IDS-Na genanntes Produkt der Firma Lanxess, mit dem Markennamen Baypure CX 100™, Einsatz 0,2% reine Substanz

### Die visuelle Auswertung der Testplatten ergab folgendes Resultat:

### 1.Silikatputz ohne Zusatz

Auf beiden Plattenhälften ist ein deutlicher Algen und Flechtenbewuchs sichtbar.

### 2. Silikatputz mit 0,5 % Dilurit^{™} 808

Beide Plattenhälften sind weitgehend ohne Algen- und Flechtenbewuchs..

### 3. Silikatputz mit 0,5 % Actizide EPS™ Paste

Plattenhälfte ohne Härter Targon HSF™ (Silikathärter auf Basis von Aluminiumphosphat) ist ohne Bewuchs, auf der anderen Hälfte mit Targon HSF (Silikathärter auf Basis von Aluminiumphosphat) sind leichte Ansätze von Algen und Flechtenbewuchs sichtbar.

### 4. Putz mit 0,2 % NTA, reine Substanz

Auf beiden Plattenhälften kein Algen - und Flechtenbewuchs sichtbar.

### 5. Platte mit Putz enthaltend 0,2 % Iminodibernsteinsäure

Auf beiden Plattenhälften wurde kein Algen- und Flechtenbewuchs sichtbar festgestellt. Eine deutliche Minderung des Algen- und Flechtenbewuchses ist sichtbar, auf der Plattenhälfte ohne Targon HSF /Silikathärter auf Basis von Aluminiumphosphat/ ist ein sehr schwacher Algenansatz zu erkennen. Auf der Hälfte mit Targon HSF sind sehr viel weniger Algen und Flechten sichtbar.

Es wurde nicht nur der Algen- und Flechtenbewuchs reduziert, sondern die Testplatten blieben auch von sonstiger organischer Verschmutzung frei. Offenbar wurde die Oberfläche der Platten "unangreifbar" für jegliche Anhaftungen.
Dieser überraschender Effekt hat sicher komplexe Ursachen, die im Einzelnen noch nicht untersucht werden konnten. eine Rolle dabei könnte der pH Wert und der Grad der Hydrophobierung, aber auch die Wechselwirkung der erfindungemäßen Substanzen mit den anderen Putz - bzw. Farbenbestandteilen spielen.

Erfindungsgemäß kann man die Iminodibernsteinsäure durch die oben erwähnten beiden Polycarbonsäure -Salzen NTA und/oder MGDA, bzw. auch durch ihre Mischungen austauschen. Auch diese Salze wirken in vergleichbaren Konzentrationen, wie die Iminodibernsteinsäure schützend vor oberflächlichem Belag, wie z. B. Algen- und Flechtenbewuchs

In den Tabellen 1 und 2 sind erfindungsgemäße Rezepturen von Silikatfarben und Organosilikatputzen aufgeführt. Die erfindungsgemäß einsetzbaren Verbindungen sind jeweils fett gekennzeichnet.

| **Tabelle 1** | | | |
|---|---|---|---|
| **Dispersionsfarbe /Silikatfarbe/ für Außenanstriche** | | | |
| **Gew.- Teile** | | | |
| **204,5** | | **Wasser** | |
| **1,0** | **BKG** | **Calgon ^{tm} auf Phosphatbasis** | **Dispergiermittel** |
| **2,5** | | **Tylose H 4000** | **Verdicker** |
| **3,0** | **BKG** | **Lopon^{tm} 895 (890) auf Acrylatbasis** | **Dispergiermittel** |
| **100,0** | | **Titandioxid Weißpigment** | **Kronos 2160** |
| **100,0** | | **Dorkafill H^{tm}** | **Anorg. Füllstoff** |
| **170,0** | | **Acronal 290 D^{tm}** | **Dispersion 50%ig** |
| **286,0** | | **Füllstoff Calciumcarbonat** | |
| **100,0** | | **Talkum** | |
| **15,0** | | **Filmbildehilfsmittel** | |
| **2,0** | | **Borchigel L 75 N^{tm}** | **PU Verdicker** |
| **10,0** | | **Loxanol 842 DP^{tm}** | **Fettalkohol /C17-C18/** |
| **4,0** | | **Agitan 280^{tm}** | **Entschäumer** |
| **2,0** | | **Iminodibernsteinsäure Na-Salz** | **erfindungsgemäßer Zusatz** |
| **1000,0** | | | |

| **Tabelle 2** | | | |
|---|---|---|---|
| **Organo-Silikatputz** | | | |
| **Gew.- Teile** | | | |
| **53,5** | | **Wasser** | |
| **2,5** | | **Tylose** | **Verdicker** |
| **1.0** | | **Kalilauge** | |
| **3,0** | | **Lopon^{tm} 895 (890)** | **Dispergiermittel** |
| **30,0** | | **Titandioxid** | **Kronos 2160** |
| **200,0** | | **Marmor-Körnung 1-1,5 mm** | |
| **50,0** | | **Acronal 290 D^{tm}** | **Dispersion 50%ig** |
| **4,0** | | **Lopon^{tm} ST (auf Basis org. Ammoniumverbindungen)** | **Stabilisator** |
| **105,0** | | **Kalium-Silikat, K 2837** | |
| **390,0** | | **Füllstoff auf Basis Calciumcarbonat** | |
| **120,0** | | **Marmor-Körnung 2-2,5 mm** | |
| **5,0** | | **Filmbildehilfsmittel auf Basis Polyalkohole** | |
| **5,0** | | **Fasern** | |
| **10,0** | | **Glimmer** | **Füllstoff** |
| **5,0** | | **Stabilisator auf Basis Phosphate** | |
| **5,0** | | **Fettalkohol /C17-C18/** | |
| **10,0** | | **Hydrophobierungsmittel** | **Silikone** |
| **1,0** | | **Nitrilotriessigsäure /NTA/** | **erfindungsgemäßer Zusatz** |
| **1000,0** | | | |

Es zeigt sich, dass die erfindungsgemäße Substanz Iminodibernsteinsäure bzw. die entsprechenden Na- und/oder K-Salze und/oder Nitrilotriessigsäure /NTA/ bereits in geringen Mengen in Silikatfarben und Silikatputzen, in Dispersionsfarben- und Dispersionsputzen, in Silikatharzfarben und Silikatharzputzen einen langjährigen Schutz vor organischem Belägen bietet und daher als unschädliche Alternative zum Schutz und zur Reinigung von Putzoberflächen verwendbar ist

## Patentansprüche

1. Verwendung von organischen komplexierenden Iminopolycarbonsäuren als Schutz-und Reinigungsmittel in Silikatfarben und Silikatputzen, in Dispersionsfarben- und Dispersionsputzen, in Silikatharzfarben und Silikatharzputzen.

2. Verwendung von Schutz-und Reinigungsmitteln nach Anspruch 1, **dadurch gekennzeichnet, daß** bevorzugt die Natrium-und/oder Kaliumsalze der Iminodibernsteinsäure und/oder der Nitrilotriessigsäure, und/oder der Methylglycindiessigsäure in Mengen von 0, 1 bis 2,5 Gew. % den Silikatfarben und Silikatputzen, in Dispersionsfarben- und Dispersionsputzen, in Silikatharzfarben und Silikatharzputzen zugesetzt sind.

3. Verwendung von Schutz-und Reinigungsmitteln nach den Ansprüchen 1 oder 2, **dadurch gekennzeichnet, daß** die Natrium -und/oder Kaliumsalze der Iminodibernsteinsäure und/oder der Nitrilotriessigsäure, und/oder der Methylglycindiessigsäure in Mengen bevorzugt von 0, 2 bis 0,5 Gew. % Silikatfarben und Silikatputzen, in Dispersionsfarben- und Dispersionsputzen, in Silikatharzfarben und Silikatharzputzen enthalten sind.

4. Verwendung gemäß Anspruch 1 oder 2, **dadurch gekennzeichnet, dass** die Formulierungen zusätzlich bis zu 5 Gew. % Aluminiumpolyphosphat der Formel AlPO₄ enthalten.
